# EUROPÄISCHE PATENTANMELDUNG

(11) **EP 3 689 147 A1**
(43) Veröffentlichungstag der Anmeldung: **05.08.2020**
(21) Anmeldenummer: 19154184.6
(22) Anmeldetag: 29.01.2019
(51) Int. Cl.: A22C 21/00

(54) **VORRICHTUNG UND VERFAHREN ZUM TRENNEN MINDESTENS EINER EIN BRUSTFILET EINES ENTWEIDETEN GEFLÜGELKÖRPERS ODER EINES TEILS DAVON MIT EINER KARKASSE DES GEFLÜGELKÖRPERS ODER TEILS DAVON VERBINDENDEN SEHNE SOWIE WERKZEUGEINHEIT HIERFÜR**

(71) Anmelder: Nordischer Maschinenbau Rud. Baader GmbH + Co. KG, 23560 Lübeck (DE)
(72) Erfinder: Schulze, Adrian, 23564 Lübeck (DE)
(74) Vertreter: Stork Bamberger Patentanwälte PartmbB

(57) **Zusammenfassung**

Die Erfindung betrifft eine Vorrichtung (10), ausgebildet und eingerichtet zum Trennen mindestens einer ein Brustfilet eines entweideten und von Flügeln befreiten Geflügelkörpers oder eines Teils davon mit einer Karkasse des Geflügelkörpers oder Teils davon verbindenden Sehne, umfassend eine Transportvorrichtung (11) mit einer umlaufend angetriebenen Transporteinheit (12) sowie mindestens einer daran befestigten Haltevorrichtung (13), die zum Halten des Geflügelkörpers oder des Teils davon während der Verarbeitung ausgebildet und eingerichtet ist, und ein Mittel (14) zum Trennen der Sehne, wobei das Mittel (14) zum Trennen aus einer Warteposition in eine Trennposition und zurück bewegbar ausgebildet und eingerichtet ist und die Transporteinheit (12) mit der oder jeder Haltevorrichtung (13) unter Bildung eines Transportpfades zum Transportieren des Geflügelkörpers oder des Teils davon in Transportrichtung T mit der Anusseite voraus in Richtung des Mittels (14) zum Trennen ausgebildet und eingerichtet ist, die sich dadurch auszeichnet, dass das Mittel (14) zum Trennen der Sehne mindestens ein Kombinationswerkzeug (15 oder 16) umfasst, das derart ausgebildet und eingerichtet ist, dass es einen das Brustfilet verdrängenden Abschnitt und einen die Sehne trennenden Abschnitt aufweist. Die Erfindung betrifft auch ein entsprechendes Verfahren sowie eine Werkzeugeinheit (37, 38) zum Ausführen des Verfahrens.

## Beschreibung

Die Erfindung betrifft eine Vorrichtung, ausgebildet und eingerichtet zum Trennen mindestens einer ein Brustfilet eines entweideten und von Flügeln befreiten Geflügelkörpers oder eines Teils davon mit einer Karkasse des Geflügelkörpers oder Teils davon verbindenden Sehne, umfassend eine Transportvorrichtung mit einer umlaufend angetriebenen Transporteinheit sowie mindestens einer daran befestigten Haltevorrichtung, die zum Halten des Geflügelkörpers oder des Teils davon während der Verarbeitung ausgebildet und eingerichtet ist, und ein Mittel zum Trennen der Sehne, wobei das Mittel zum Trennen aus einer Warteposition in eine Trennposition und zurück bewegbar ausgebildet und eingerichtet ist und die Transporteinheit mit der oder jeder Haltevorrichtung unter Bildung eines Transportpfades zum Transportieren des Geflügelkörpers oder des Teils davon in Transportrichtung T mit der Anusseite voraus in Richtung des Mittels zum Trennen ausgebildet und eingerichtet ist.

Die Erfindung betrifft des Weiteren ein Verfahren, ausgebildet und eingerichtet zum Trennen mindestens einer ein Brustfilet eines entweideten und von Flügeln befreiten Geflügelkörpers oder eines Teils davon mit einer Karkasse des Geflügelkörpers oder Teils davon verbindenden Sehne, umfassend die Schritte: Aufsatteln des Geflügelkörpers oder des Teils davon auf eine an einer Transporteinheit befestigten Haltevorrichtung, Transportieren des Geflügelkörpers oder des Teils davon mittels der Transporteinheit in Transportrichtung T entlang eines Transportpfads mit der Anusseite voraus in Richtung eines Mittels zum Trennen, Trennen der Sehne mit dem Mittel zum Trennen, indem das Mittel zum Trennen aus einer Warteposition in eine Trennposition bewegt wird, wenn der Geflügelkörper oder das Teil davon an dem Mittel zum Trennen vorbeitransportiert wird, wobei das Mittel zum Trennen nach dem Trennen der Sehne zurück in die Warteposition bewegt wird.

Die Erfindung befasst sich auch mit einer Werkzeugeinheit, ausgebildet und eingerichtet zum Trennen einer ein Brustfilet eines entweideten und von Flügeln befreiten Geflügelkörpers oder eines Teils davon mit einer Karkasse des Geflügelkörpers oder Teils davon verbindenden Sehne.

In der Geflügel verarbeitenden Industrie werden entweidete Geflügelkörper oder Teile davon in entsprechenden Vorrichtungen, häufig als Hähnchenfiletiermaschine bezeichnet, automatisch oder semiautomatisch verarbeitet. Für die Verarbeitung sind die Geflügelkörper oder Teile davon mit Bezug auf die jeweiligen Verarbeitungswerkzeuge zu positionieren. Üblicherweise sind mehrere Haltevorrichtungen an einer umlaufend angetriebenen Transporteinheit befestigt, mittels der die Geflügelkörper oder Teile davon in Transportrichtung T entlang eines Transportpfades einer oder mehreren Bearbeitungsstationen zugeführt bzw. in deren Wirkbereich gebracht werden. Zum Start der Verarbeitung werden die Geflügelkörper oder Teile davon automatisch oder manuell auf die Haltevorrichtung aufgesteckt und fixiert. Dieser Vorgang wird insgesamt auch als Aufsatteln bezeichnet.

Als Beispiel für die Verarbeitung von Geflügelkörpern oder Teilen davon ist an dieser Stelle das Entfernen von Brustfilets von Brustkappen genannt, bei denen die Flügel bereits entfernt wurden. Die Verarbeitung betrifft aber in gleicher Weise auch so genannte "Fronthalves" oder andere noch die Brustfilets tragende Teile des Geflügelkörpers. In vollautomatischen oder semiautomatischen Hähnchenfiletiermaschinen werden die aufgesattelten Brustkappen, die bereits beidseitig z.B. durch eine so genannte "cut-up-Vorrichtung" im Bereich ihrer Flügelgelenke durch einen so genannten Flügelschnitt von den Flügeln befreit sind, einer Bearbeitungsstation zugeführt, mittels der das Brustfilet, bevorzugt und üblich die beiden Brustfilets einer Brustkappe, durch ein Werkzeug, z.B. einen Schaber oder ein Messer, im Bereich der Flügelgelenke von der Karkasse gelöst wird. Diesem als Anlösen bezeichneten Verarbeitungsschritt folgt im weiteren Verarbeitungsprozess das vollständige Lösen und Trennen der Brustfilets von der Karkasse.

Das Anlösen der Brustfilets wird jedoch durch unzureichende und/oder unvollständige Flügelschnitte erschwert, da die schlechten Flügelschnitte dazu führen, dass am Flügelgelenk Sehnen erhalten bleiben, die das Brustfilet, also das Außenfilet, noch fest mit der Karkasse verbinden. Ein weiteres Problem besteht darin, dass es beim Anlösen zu Ausbeuteverlusten kommt, da das Brustfilet mindestens teilweise am Flügelgelenk hängen bleibt.

Bei bekannten Lösungen, bei denen das Anlösen mit einer Klinge erfolgt, wird die Brustkappe mit der Anusseite vorauslaufend, also mit in Transportrichtung T nachlaufendenden Flügelgelenken, entlang des durch die Transporteinheit und der oder jeder Haltevorrichtung vorgegebenen Transportpfades transportiert. Die Transportrichtung T kann dauerhaft mit der Anusseite vorauslaufend vorgesehen sein. Selbstverständlich kann die Brustkappe auch erst unmittelbar vor dem Mittel zum Trennen in die gewünschte Position/Ausrichtung gebracht werden. Wenn die Haltevorrichtung mit der darauf fixierten Brustkappe an dem Mittel zum Trennen der Sehne vorbeitransportiert wird, wird das Mittel aus der Warteposition in die Trennposition bewegt. Warteposition bedeutet in diesem Zusammenhang, dass das Mittel zum Trennen so weit außerhalb des Transportpfades steht, dass die Haltevorrichtung bzw. die darauf fixierte Brustkappe das Mittel zum Trennen ohne einen Eingriff in die Brustkappe passieren kann. Trennposition bedeutet in diesem Zusammenhang, dass das Mittel zum Trennen in den Transportpfad ragt, derart, dass die auf der Haltevorrichtung fixierte Brustkappe zwangsläufig in Kontakt mit dem Mittel zum Trennen kommt. Anders ausgedrückt beschreibt die Trennposition die Position, in der das Mittel zum Trennen in seiner bestimmungs- und funktionsgemäßen Position steht. Das Mittel zum Trennen ist in der Trennposition so eingestellt, dass es zum Trennen auf den Bereich des Flügelgelenks trifft, in dem die Sehne verläuft. Nach dem Trennen der Sehne wird das Mittel zum Trennen wieder zurück in die Warteposition bewegt.

Das Mittel zum Trennen ist bei den bekannten Lösungen eine Art Stichel bzw. eine Klinge, die von außen durch das Außenfilet in Richtung der Flügelgelenke sticht. Dabei wird nicht nur das Brust- bzw. Außenfilet eingeschnitten. Es besteht auch die Gefahr, dass das unter dem Außenfilet liegende Innenfilet beschädigt wird.

Der Erfindung liegt somit die Aufgabe zugrunde, eine einfache und kompakte Vorrichtung zu schaffen, die unabhängig von der Qualität des Flügelschnitts ein hinsichtlich Qualität und Quantität verbessertes Filetierergebnis gewährleistet. Die Aufgabe besteht weiterhin darin, ein entsprechendes Verfahren sowie eine Werkzeugeinheit zur Durchführung dieses Verfahrens vorzuschlagen.

Diese Aufgabe wird durch eine Vorrichtung der eingangs genannten Art dadurch gelöst, dass das Mittel zum Trennen der Sehne mindestens ein Kombinationswerkzeug umfasst, das derart ausgebildet und eingerichtet ist, dass es einen das Brustfilet verdrängenden Abschnitt und einen die Sehne trennenden Abschnitt aufweist. Mit dem erfindungsgemäßen Kombinationswerkzeug und der entsprechenden Ausbildung als kombiniertes Verdrängungs- und Trennmittel wird ein sicheres, das Außen- und Innenfilet schonendes Anlösen der Brustfilets im Bereich des Flügelgelenks gewährleistet, wodurch sich die Außenfilets leichter abziehen lassen. Im Ergebnis kann das Anlösen der Außenfilets unabhängig von der Qualität des Flügelschnitts, also selbst bei nicht anatomisch korrekt ausgeführten Flügelschnitten, zuverlässig erreicht werden, so dass die Außenfilets unbeschädigt und vollständig, also ohne Restfleisch an der Karkasse, gewonnen/geerntet werden können.

Zweckmäßigerweise umfasst das Mittel zum Trennen zwei Kombinationswerkzeuge, die auf einander gegenüberliegenden Seiten des Transportpfads angeordnet sind, wobei die beiden Kombinationswerkzeuge diametral oder in Transportrichtung T versetzt zueinander angeordnet sind. Dadurch kann auf kompakte Weise eine synchrone oder zeitversetzte Bearbeitung beider Brustfilets einer Brustkappe zügig und sicher ausgeführt werden.

Eine bevorzugte Weiterbildung ist dadurch gekennzeichnet, dass jedes Kombinationswerkzeug um eine vertikal gerichtete Achse, die senkrecht zur Transportrichtung T ausgerichtet ist, schwenkbar ausgebildet ist. Diese Ausführung dient bei einer im Bereich des Mittels zum Trennen in einer horizontalen Ebene geführten Haltevorrichtung zu einem zuverlässigen und schnellen Bewegen der Kombinationswerkzeuge aus der Warteposition in die Trennposition und zurück. Die Ausrichtung der Schwenkachse kann jedoch je nach Ausrichtung/Lage der Transporteinheit bzw. der an der Transporteinheit befestigten Haltevorrichtungen variieren.

Besonders bevorzugt umfasst jedes Kombinationswerkzeug einen Klingenhalter und eine Klinge, wobei der Klingenhalter auf der dem Transportpfad zugewandten Seite zum Verdrängen des Brustfilets stumpf ausgebildet und eingerichtet ist, während die Klinge auf der dem Transportpfad abgewandten Seite zum Trennen der Sehne scharfkantig ausgebildet und eingerichtet ist. Mit anderen Worten ist das Kombinationswerkzeug sowohl in der Warteposition als auch in der Trennposition auf der dem zu bearbeitenden Brustfilet zugewandten Seite stumpf, während es auf der dem Brustfilet abgewandten Seite scharfkantig ausgebildet ist. Die scharfkantige Seite, also die Klinge, ist durch den stumpfen Klingenhalter somit zumindest an der Längsseite gegenüber dem Brustfilet abgeschirmt, so dass ein Kontakt zwischen Klinge und Brustfilet verhindert wird. Durch die Kombination von Klingenhalter und Klinge kann auf kompakte Weise mit einem Werkzeug sowohl der Verdrängungsschnitt zum Verdrängen des Brustfilets und Schaffen eines Zugangs zur Sehne als auch der Trennschritt zum Schneiden der Sehne ausgeführt werden.

Vorteilhafterweise weist der Klingenhalter eine stumpfe Fädelkante auf, die in der Warteposition des Kombinationswerkzeugs in Transportrichtung T gesehen auf diese zulaufend ausgerichtet und in der Trennposition des Kombinationswerkzeugs etwa parallel zur Transportrichtung T ausgerichtet ist. Mit dieser Ausführung ist das Kombinationswerkzeug schonend gegen das Brustfilet bewegbar, so dass es leicht in das Brustfilet eintauchen kann, ohne es zu verletzen, wobei die in der Warteposition geneigte Stellung der gegenüberliegenden Fädelkanten beider Klingenhalter eine Art Einlauftrichter bzw. eine Einlaufhilfe für die zu bearbeitende Brustkappe bildet, während die in der Trennposition linear und parallel zur Transportrichtung T gerichteten Fädelkanten das Führen des Kombinationswerkzeugs in den Bereich des Flügelgelenkes, in dem sich die Sehne befindet, vereinfacht und insbesondere auch das Auffädeln/Aufsammeln der Sehne erleichtert.

Eine vorteilhafte Weiterbildung ist dadurch gekennzeichnet, dass die stumpfe Fädelkante an ihrem freien Ende, das der Transportrichtung T entgegengerichtet ist, eine abgerundete Leitnase aufweist, die die Klinge in Transportrichtung T abdeckt. Diese Leitnase als Bestandteil des Klingenhalters stellt sicher, dass weder die Brustfilets noch irgendein anderer Bestandteil der Brustkappe beim Transport in Transportrichtung T direkt, also frontal auf die Klinge trifft. Im Gegenteil ist durch die Leitnase sichergestellt, dass die zu trennende Sehne im Bereich des Flügelgelenks beim Einschwenken in die Trennposition aufgefädelt/aufgenommen und in Richtung der Klinge geführt wird.

Zweckmäßigerweise sind der Klingenhalter und die Klinge einstückig miteinander ausgebildet und aus Edelstahl hergestellt. Anders ausgedrückt ist die Klinge integraler Bestandteil des Klingenhalters. Durch die Einstückigkeit, also die einteilige Ausbildung von Klingenhalter einschließlich der Leitnase und Klinge, ist eine Längsseite des Klingenhalters sowie die der Transportrichtung T entgegenstehende Stirnseite stumpf ausgebildet, bildet also die Fädelkante, während die andere Längsseite scharfkantig ausgebildet ist. Damit ist ein einfaches und kompaktes Werkzeug geschaffen, das auch noch leicht zu reinigen ist. Klingenhalter und Klinge können aber auch separate Elemente sein, die fest aber lösbar miteinander verbunden sind.

Jedes Kombinationswerkzeug, also insbesondere der Klingenhalter und/oder die Klinge, ist/sind lösbar an einem Stellarm angeordnet, wobei der Stellarm bezüglich seiner Position quer zur Transportrichtung T zur Veränderung des Abstandes des Kombinationswerkzeugs zur Haltevorrichtung und damit zur Veränderung der Eintauchtiefe jedes Kombinationswerkzeugs in den zu verarbeitenden Geflügelkörper oder das Teil davon verstellbar ausgebildet und eingerichtet ist. Zum einen ist dadurch sichergestellt, dass das Innenfilet, das unterhalb des Brust- bzw. Außenfilets liegt, sicher vor einem Kontakt mit dem Kombinationswerkzeug geschützt ist. Zum anderen lässt sich das Kombinationswerkzeug individuell auf unterschiedliche Produkte und insbesondere auf variable Größen der zu bearbeitenden Geflügelkörper oder Teilen davon anpassen.

Vorteilhafterweise ist/sind der Klingenhalter und/oder die Klinge in seiner/ihrer Position bzw. Ausrichtung zur Haltevorrichtung zur Veränderung des Winkels der Schneidkante und/oder der Fädelkante zur Transportrichtung T verstellbar ausgebildet und eingerichtet. Damit wird eine individuelle Anpassung des Kombinationswerkzeugs z.B. an unterschiedliche Anatomien der zu bearbeitenden Geflügelkörper gewährleistet.

Besonders bevorzugt ist jedes Kombinationswerkzeug in vertikaler Richtung zur Transportrichtung T verstellbar ausgebildet und eingerichtet. Dadurch lässt sich die Höhe des Eintauchens des Kombinationswerkzeuges in den Geflügelkörper oder das Teil davon bestimmen.

In einer bevorzugten Ausführungsform ist jedes Kombinationswerkzeug an eine Steuerungs- und/oder Regelungseinrichtung angeschlossen, derart, dass der Eintauchzeitpunkt des Kombinationswerkzeugs in den zu verarbeitenden Geflügelkörper oder das Teil davon, also insbesondere das Bewegen aus der Warteposition in die Trennposition und zurück, individuell steuerbar und/oder regelbar ist. Mit dieser Ausführungsform lässt sich besonders einfach und präzise ein hinsichtlich Qualität und Quantität optimiertes Filetierergebnis erzielen, und zwar unabhängig von der Qualität des Flügelschnitts.

Die Aufgabe wird auch durch ein Verfahren mit den eingangs genannten Schritten dadurch gelöst, dass das Mittel zum Trennen bei der Bewegung aus der Warteposition in die Trennposition mit einem das Brustfilet verdrängenden Abschnitt des Mittels zum Trennen in das Brustfilet eintaucht und dabei die Sehne zunächst nur aufnimmt, und die Sehne beim Weitertransport des Geflügelkörpers oder des Teils davon dann auf einen die Sehne trennenden Abschnitt des Mittels zum Trennen geführt wird, wodurch die Sehne vollständig getrennt wird. Es erfolgt somit zunächst ein schnittfreies Eintauchen des Mittels zum Trennen, also ohne einen das Brustfilet verletzenden Einschnitt in das äußere Brustfilet, bis die Sehne aufgenommen ist, und erst dann wird die Sehne durch das Mittel zum Trennen getrennt.

Vorzugsweise umfasst das Mittel zum Trennen mindestens ein Kombinationswerkzeug, das einen Klingenhalter und eine Klinge umfasst, wobei der Klingenhalter beim Schwenken aus der Warteposition in die Trennposition mit einer stumpfen Fädelkante leicht in den Geflügelkörper oder das Teil davon eintaucht, ohne den Geflügelkörper oder das Teil davon zu schneiden, und dabei die Sehne auffädelt, und die Sehne durch den Weitertransport des Geflügelkörpers oder des Teils davon auf eine scharfkantige Schneidkante der Klinge geführt und geschnitten wird.

Besonders bevorzugt wird das Verfahren mit einer Vorrichtung nach einem oder mehreren der Ansprüche 1 bis 11 ausgeführt.

Die Aufgabe wird des Weiteren durch eine Werkzeugeinheit gelöst, die sich durch folgende Merkmale auszeichnet: einen Stellarm und ein aus einem Klingenhalter und einer Klinge gebildetes Kombinationswerkzeug, das zur Bildung einer L-förmigen Einheit an dem Stellarm befestigt ist, wobei der Stellarm den langen Schenkel des L und das Kombinationswerkzeug den kurzen Schenkel des L bildet, und wobei der Klingenhalter die Klinge zur Bildung eines stumpfen Verdrängungsabschnitts auf einer Längsseite der Klinge und an einer Stirnseite der Klinge abdeckt, während die Klinge auf der der stumpfen Längsseite gegenüberliegenden Längsseite einen scharfkantigen Trennabschnitt aufweist, wobei die dem Stellarm zugewandte Innenseite des kurzen Schenkels den scharfkantigen Trennabschnitt und die vom Stellarm wegweisende Außenseite des kurzen Schenkels den Verdrängungsabschnitt bildet.

Die Werkzeugeinheit ist insbesondere dazu ausgebildet und eingerichtet, das zuvor beschriebene Verfahren auszuführen.

Die sich aus den genannten Verfahrensschritten und Merkmalen ergebenden Vorteile wurden bereits im Zusammenhang mit der Vorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der Vorrichtung und des Verfahrens sowie der Werkzeugeinheit ergeben sich aus den Unteransprüchen und der Beschreibung. Besonders bevorzugte Ausführungsformen der Erfindung werden anhand der beigefügten Zeichnung näher erläutert. In der Zeichnung zeigt:
- Fig. 1: eine perspektivische Ansicht eines Ausschnitts einer Vorrichtung zum Trennen mindestens einer ein Brustfilet eines entweideten und von Flügeln befreiten Geflügelkörpers oder eines Teils davon mit einer Karkasse des Geflügelkörpers oder des Teils davon verbindenden Sehne mit zwei zu beiden Seiten eines Transportpfads angeordneten Kombinationswerkzeugen bzw. Werkzeugeinheiten in Warteposition,
- Fig. 2: eine perspektivische Ansicht des Mittels zum Trennen der Sehne mit zwei zu beiden Seiten eines Transportpfads angeordneten Kombinationswerkzeugen bzw. Werkzeugeinheiten in Warteposition, wobei der besseren Übersicht halber die Transportvorrichtung überwiegend weggelassen wurde,
- Fig. 3: eine perspektivische Ansicht des Mittels zum Trennen der Sehne mit zwei zu beiden Seiten eines Transportpfads angeordneten Kombinationswerkzeugen bzw. Werkzeugeinheiten in Trennposition, wobei der besseren Übersicht halber die Transportvorrichtung überwiegend weggelassen wurde, und

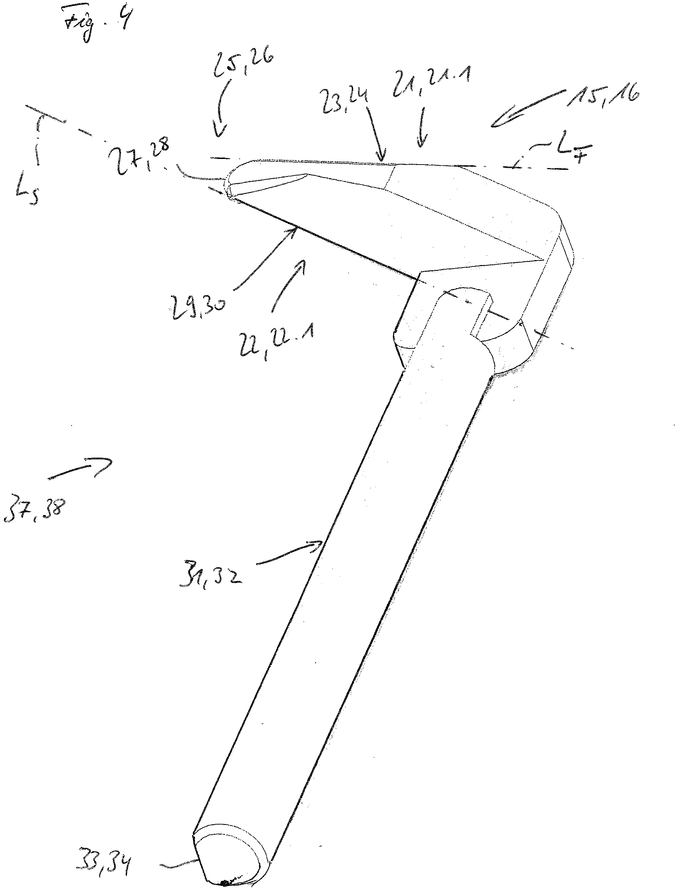

- Fig. 4: eine vergrößerte Darstellung einer Werkzeugeinheit in perspektivischer Ansicht.

Die in der Zeichnung dargestellte Vorrichtung dient zum synchronen Trennen von mindestens zwei Sehnen einer zwei Brustfilets aufweisenden Brustkappe. Die Vorrichtung kann auch zum Trennen einer einzelnen Sehne ausgebildet und eingerichtet sein. Die Vorrichtung ist des Weiteren ausgebildet und eingerichtet, andere Teile eines mindestens ein Brustfilet tragenden Geflügelkörpers entsprechend zu bearbeiten.

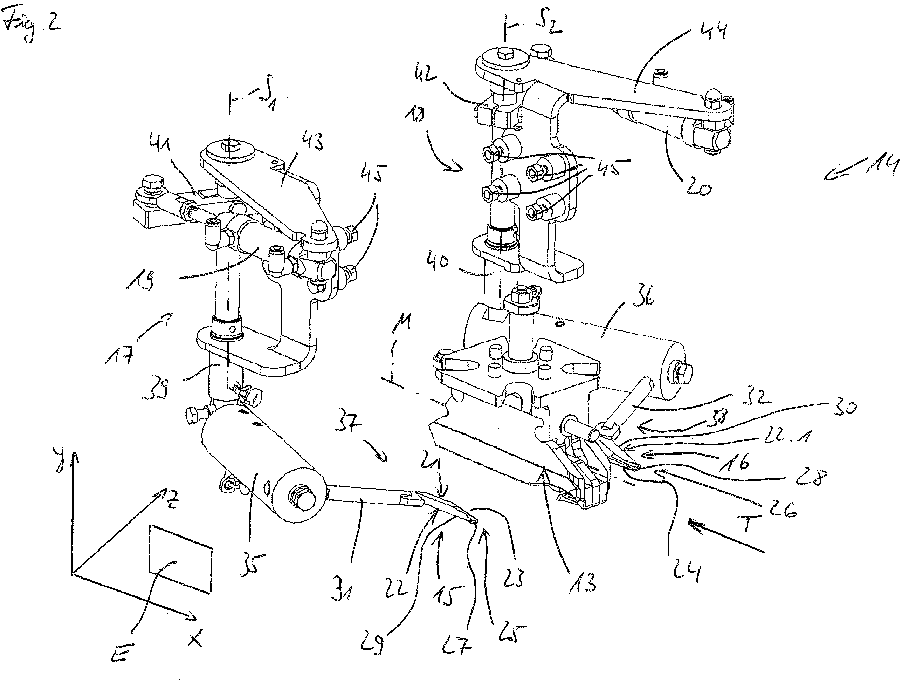

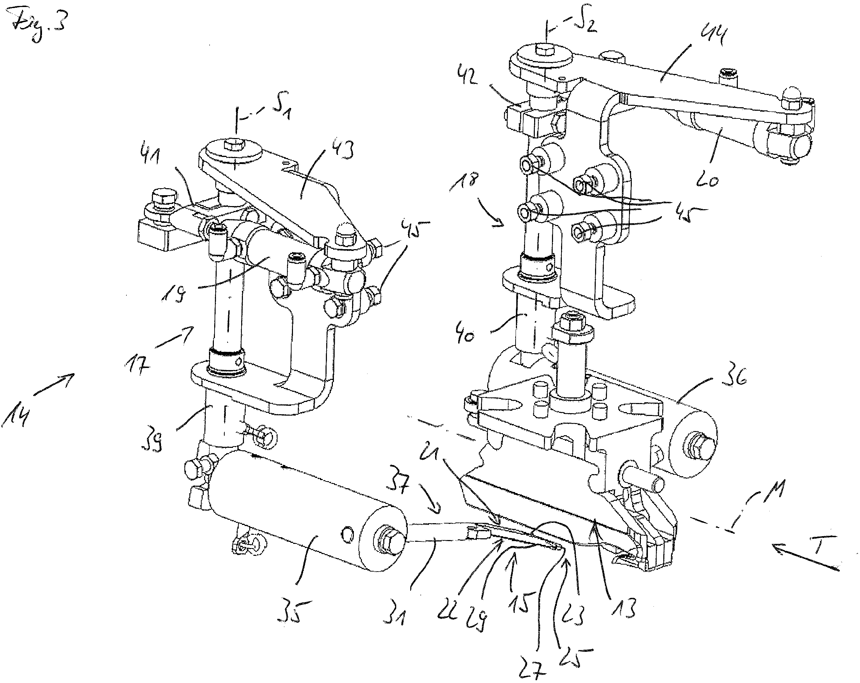

Die in der Zeichnung dargestellte Vorrichtung 10 ist zum Trennen mindestens jeweils einer ein Brustfilet eines entweideten und von Flügeln befreiten Geflügelkörpers oder eines Teils davon mit einer Karkasse des Geflügelkörpers oder Teils davon verbindenden Sehne ausgebildet und eingerichtet und umfasst eine Transportvorrichtung 11 mit einer umlaufend angetriebenen Transporteinheit 12 sowie mindestens einer daran befestigten Haltevorrichtung 13, die zum Halten des Geflügelkörpers oder des Teils davon während der Verarbeitung ausgebildet und eingerichtet ist. Des Weiteren umfasst die Vorrichtung 10 ein Mittel 14 zum Trennen der Sehne, wobei das Mittel 14 zum Trennen aus einer Warteposition (siehe insbesondere Figur 2) in eine Trennposition (siehe z.B. Figur 3) und zurück bewegbar ausgebildet und eingerichtet ist und die Transporteinheit 12 mit der oder jeder Haltevorrichtung 13 unter Bildung eines Transportpfades zum Transportieren des Geflügelkörpers oder des Teils davon in Transportrichtung T mit der Anusseite voraus in Richtung des Mittels 14 zum Trennen ausgebildet und eingerichtet ist.

Diese Vorrichtung zeichnet sich erfindungsgemäß dadurch aus, dass das Mittel 14 zum Trennen der Sehne mindestens ein Kombinationswerkzeug 15, 16 umfasst, das derart ausgebildet und eingerichtet ist, dass es einen das Brustfilet verdrängenden Abschnitt und einen die Sehne trennenden Abschnitt aufweist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

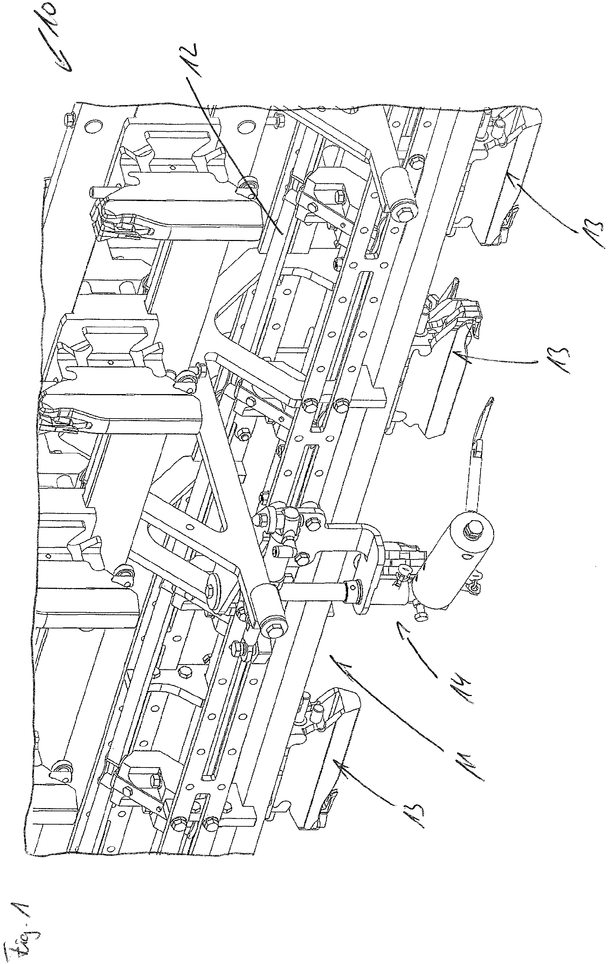

Die Transporteinheit 12 ist in der dargestellten Ausführungsform beispielhaft eine umlaufend mit einem nicht dargestellten Antrieb angetriebene Kette, die um ebenfalls nicht dargestellte Antriebs- und Umlenkelemente geführt ist. Die Drehachsen der Antriebs- und Umlenkelemente sind beispielhaft horizontal ausgerichtet, so dass die Transporteinheit 12 ein Obertrum und ein Untertrum aufweist. Die Drehachsen der Antriebs- und Umlenkelemente für die Transporteinheit 12 können aber auch geneigt oder auch vertikal ausgerichtet sein. Es kann eine einzelne Haltevorrichtung 13 vorgesehen sein. Vorzugsweise sind jeoch mehrere solcher Haltevorrichtungen 13 vorgesehen (siehe Figur 1). Die oder jede Haltevorrichtung 13 ist bevorzugt für eine Aufsteckrichtung des Geflügelkörpers oder des Teils davon ausgebildet und eingerichtet, die sich parallel zur Symmetrieebene E der Haltevorrichtung 13 erstreckt. Die Symmetrieebene E, die durch die X- und Y-Achse aufgespannt wird, verläuft vertikal und parallel zur Transportrichtung T. Die Mittelachse M der Haltevorrichtung 13 ist ebenfalls parallel zur Transportrichtung T ausgerichtet. Die Haltevorrichtung 13 kann mit ihrer Symmetrieebene E aber auch horizontal ausgerichtet sein oder in einer Schrägstellung verlaufen. Jede Haltevorrichtung 13 ist optional auch hinsichtlich ihrer Orientierung verstellbar ausgebildet.

Das Mittel 14 zum Trennen ist aufgrund der beschriebenen Ausrichtung der Haltevorrichtung 13 für das Bewegen aus der Warteposition in die Trennposition und zurück seitlich, nämlich in der X-/Z-Ebene bewegbar bzw. schwenkbar. Optional und in Abhängigkeit der Ausrichtung der Haltevorrichtung 13 kann das Mittel 14 zum Trennen auch eine andere als die dargestellte Ausrichtung aufweisen, z.B. derart, dass das Mittel 14 von oben und/oder unten in der X-/Y-Ebene auf die Haltevorrichtung 13 zu und von dieser weg bewegbar ist.

Die Vorrichtung 10 kann ein einzelnes Kombinationswerkzeug 15 oder 16 aufweisen. Bevorzugt umfasst das Mittel 14 zum Trennen jedoch zwei Kombinationswerkzeuge 15, 16, die auf einander gegenüberliegenden Seiten des Transportpfads angeordnet sind, wobei die beiden Kombinationswerkzeuge 15, 16 diametral (wie in Figuren 1 bis 3) oder in Transportrichtung T versetzt zueinander angeordnet sind. Mit der bevorzugten Ausführungsform gemäß Figur 1 ist eine synchrone Bearbeitung einer Brustkappe von zwei Seiten gewährleistet. Die beiden Kombinationswerkzeuge 15, 16 können gemeinsam betätigbar sein. Bevorzugt sind die Kombinationswerkzeuge 15, 16 jedoch separat ansteuerbar.

Jedes Kombinationswerkzeug 15, 16 ist um eine vertikal gerichtete Achse, die senkrecht zur Transportrichtung T ausgerichtet ist, schwenkbar ausgebildet. Die Schwenkachsen S₁ und S₂ verlaufen parallel zueinander. Die Kombinationswerkzeuge 15, 16 weisen jeweils einen Stellmechanismus 17, 18 auf, der jeweils einen Pneumatikzylinder 19, 20 oder andere Stellglieder zum Bewegen der Kombinationswerkzeuge 15, 16 aus der Warteposition in die Trennposition und zurück umfasst. Der Stellmechanismus 17, 18 wird weiter unten noch weiter beschrieben.

Jedes Kombinationswerkzeug 15, 16 umfasst einen Klingenhalter 21, 21.1 und eine Klinge 22, 22.1, wobei der Klingenhalter 21, 21.1 auf der dem Transportpfad zugewandten Seite zum Verdrängen des Brustfilets stumpf ausgebildet und eingerichtet ist, während die Klinge 22, 22.1 auf der dem Transportpfad abgewandten Seite zum Trennen der Sehne scharfkantig ausgebildet und eingerichtet ist. Das Kombinationswerkzeug 15, 16 weist entsprechend zwei Funktionsseiten auf, von denen eine, nämlich die Verdrängungsseite, der Haltevorrichtung 13 und damit der Brustkappe oder dergleichen zugewandt ist, und die andere, nämlich die Schneidseite, von der Haltevorrichtung 13 abgewandt und durch den Klingenhalter 21, 21.1 gegenüber der Brustkappe abgeschirmt ist.

Der Klingenhalter 21, 21.1 weist eine stumpfe Fädelkante 23, 24 auf, die in der Warteposition des Kombinationswerkzeugs 15, 16 in Transportrichtung T gesehen auf diese zulaufend ausgerichtet und in der Trennposition des Kombinationswerkzeugs 15, 16 etwa parallel zur Transportrichtung T ausgerichtet ist. In der Figur 1 ist die Trennposition dargestellt, bei der die beiden Fädelkanten 23, 24 etwa parallel zueinander verlaufen. Die stumpfen Fädelkanten 23, 24 weisen an ihrem freien Ende 25, 26, das der Transportrichtung T entgegengerichtet ist, eine abgerundete Leitnase 27, 28 auf, die die Klinge 22, 22.1 in Transportrichtung T abdeckt. Anders ausgedrückt trifft die Brustkappe oder dergleichen, wenn die Kombinationswerkzeuge 15, 16 in die Trennposition geschwenkt sind, beim weiteren Transport in Transportrichtung T zuerst auf die Leitnasen 27, 28, die dann durch die Transportbewegung der Brustkappe in den Bereich des Flügelgelenks vordringen, so dass die Sehne über die Leitnasen 27, 28 entsprechend auf den Klingenhalter 21, 21.1 aufgefädelt und in Richtung der Klinge 22, 22.1 geführt wird.

Die Klinge 22, 22.1 weist eine scharfe Schneidkante 29, 30 auf, die in der Trennposition ausgehend vom Transportpfad in Transportrichtung T gesehen nach außen laufend gerichtet ist, so dass bei fortlaufendem Transport der Brustkappen in Transportrichtung T die aufgefädelten Sehnen nach außen geführt und dadurch quasi gespannt werden, wodurch sich der Druck der Sehne auf die scharfe Schneidkante 29, 30 erhöht, was letztlich zu einem zuverlässigen Trennen/Schneiden der Sehne führt.

Das Kombinationswerkzeug 15, 16 kann mehrteilig ausgebildet sein. Die Einzelteile Klingenhalter 21, 21.1 und Klinge 22, 22.1 sind dann fest aber lösbar und ggf. verstellbar zueinander miteinander verbunden. Dabei kann der Klingenhalter 21, 21.1, der auch die Leitnase 27, 28 umfasst, z.B. aus Kunststoff hergestellt sein, während die Klinge 22, 22.1 aus Edelstahl besteht. In dem beschriebenen Beispiel sind der Klingenhalter 21, 21.1 und die Klinge 22, 22.1 einstückig miteinander ausgebildet und aus Edelstahl hergestellt. Andere Ausbildungen des Kombinationswerkzeugs 15, 16 sowie andere Materialien, wie z.B. Keramik, und Materialkombinationen sind ebenfalls einsetzbar.

Vorteilhafterweise ist/sind der Klingenhalter 21, 21.1 und/oder die Klinge 22, 22.1 lösbar an einem Stellarm 31, 32 angeordnet, wobei der Stellarm 31, 32 bezüglich seiner Position quer zur Transportrichtung T zur Veränderung des Abstandes des Kombinationswerkzeugs 15, 16 zur Haltevorrichtung 13 und damit zur Veränderung der Eintauchtiefe jedes Kombinationswerkzeugs 15, 16 in den zu verarbeitenden Geflügelkörper oder das Teil davon verstellbar ausgebildet und eingerichtet ist. Der Stellarm 31, 32 kann auch einstückig mit dem Klingenhalter 21, 21.1 und/oder der Klinge 22, 22.1 ausgebildet sein. Der Stellarm 31, 32 ist in der dargestellten Ausführungsform ein einfaches Rundprofil, das eine Abflachung 33, 34 aufweist, um den Stellarm 31, 32 verdrehsicher an einem Träger 35, 36 zu befestigen. Der Stellarm 31, 32 kann aber auch andere Formen und Ausbildungen aufweisen.

Der Stellarm 31, 32 bildet zusammen mit dem Kombinationswerkzeug 15, 16 eine L-förmige Werkzeugeinheit 37, 38, wobei der Stellarm 31, 32 den langen Schenkel des L bildet, während das Kombinationswerkzeug 15, 16 den kurzen Schenkel des L bildet. Auf der Innenseite des kurzen Schenkels, die dem Stellarm 31, 32 zugewandt ist, ist die Klinge 22, 22.1 ausgebildet. Auf der Außenseite des kurzen Schenkels, die vom Stellarm 31, 32 abgewandt ist, ist der Klingenhalter 21, 21.1 ausgebildet.

Der Stellarm 31, 32 ist als Bestandteil des Stellmechanismus 17, 18 an dem Träger 35, 36 angeordnet. Der Träger 35, 36 ist beispielhaft ein zylindrischer Körper, an dem der Stellarm 31, 32 (verdreh-)fest aber lösbar befestigt ist. Der Stellmechanismus 17, 18 umfasst weiterhin eine Welle 39, 40 oder dergleichen, an der der Träger 35, 36 befestigt ist, sowie die Pneumatikzylinder 19, 20, mittels dem die Welle 39, 40 über einen Hebel 41, 42 oder dergleichen zur Ausübung der Schwenkbewegung des Kombinationswerkzeugs 15, 16 bewegbar, nämlich drehbar ist. Die Pneumatikzylinder 19, 20 sind dazu mit einem Ende am Hebel 41, 42 befestigt. Mit dem entgegengesetzten Ende sind die Pneumatikzylinder 19, 20 an einem Bügel 43, 44 befestigt und durch diesen gehalten. Die Bügel 43, 44 ihrerseits sind ortsfest an einem nicht explizit dargestellten Gehäuse/Rahmen oder dergleichen der Vorrichtung 10 angeordnet, vorzugsweise lösbar z.B. durch Schrauben 45. Andere Ausbildungen des Stellmechanismus 17, 18, die eine Bewegung des Kombinationswerkzeugs 15, 16, die auch linear sein kann, aus der Warteposition in die Trennposition und zurück ermöglichen, sind ebenfalls möglich.

Der Klingenhalter 21, 21.1 und/oder die Klinge 22, 22.1 ist/sind in seiner/ihrer Position bzw. Ausrichtung zur Haltevorrichtung 13 zur Veränderung des Winkels der Schneidklinge 29, 30 und/oder der Fädelkante 23, 24 zur Transportrichtung T verstellbar ausgebildet und eingerichtet. Im Falle einer einstückigen Ausbildung des Kombinationswerkzeugs 15, 16 erfolgt die Veränderung synchron. Im Falle einer mehrteiligen Ausbildung kann die Klinge 22, 22.1 auch relativ zum Klingenhalter 21, 21.1 verstellt werden. Neben der Verstellung des Kombinationswerkzeugs 15, 16 in Z-Richtung (siehe Figuren 2 und 3) und einer Verstellung des Winkels der Fädelkante 23, 24 und Schneidkante 29, 30, also des Winkels zwischen der Längsachse Ls der Schneidkante 29, 30 einerseits und der Längskante L_{F} der Fädelkante 23, 24 andererseits zur Transportrichtung T ist jedes Kombinationswerkzeug 15, 16 alternativ oder kumulativ auch in vertikaler Richtung zur Transportrichtung T, also in Y-Richtung (siehe Figuren 2 und 3) verstellbar ausgebildet und eingerichtet. Diese Verstellmöglichkeit kann z.B. durch eine Vertikalbewegung des gesamten Stellmechanismus 17, 18 erfolgen.

Jedes Kombinationswerkzeug 15, 16 ist bevorzugt an eine - separate oder gemeinsame - und nicht explizit dargestellte Steuerungs- und/oder Regelungseinrichtung angeschlossen, derart, dass der Eintauchzeitpunkt des Kombinationswerkzeugs 15, 16 in den zu verarbeitenden Geflügelkörper oder das Teil davon, also insbesondere das Bewegen aus der Warteposition in die Trennposition und zurück, individuell steuerbar und/oder regelbar ist. Genauer ist der Pneumatikzylinder 19, 20 - oder ein entsprechendes Betätigungsmittel - an die Steuerungs- und/oder Regelungseinrichtung angeschlossen. An die oder jede Steuerungs- und/oder Regelungseinrichtung können auch die Antriebe für die Transporteinheit 12 angeschlossen sein. Auch andere nicht dargestellte Antriebe, Stellmotore oder dergleichen können an die oder jede Steuerungs- und/oder Regelungseinrichtung angeschlossen sein. Die Steuerungs- und/oder Regelungseinrichtung kann weiterhin mit einem Computer verbunden sein, der Speichermedien und/oder Datenbanken umfasst.

Die Vorrichtung 10 kann als Einzelvorrichtung eingesetzt werden. Bevorzugt sind jedoch entlang des Transportpfads der Transporteinheit 12 zur Bildung einer Brustkappenfiletiervorrichtung weitere Verarbeitungswerkzeuge, z.B. in Form von Schabewerkzeugen, Messern, Kreismessern oder dergleichen angeordnet.

Die Kombinationswerkzeuge 15, 16, und vorzugsweise die aus Kombinationswerkzeug 15, 16 und Stellarm 31, 32 gebildeten Werkzeugeinheiten 37, 38, sind als Austausch- oder Ersatzteil ausgebildet. Die Werkzeugeinheiten 37, 38 sind zum Trennen einer ein Brustfilet eines entweideten und von Flügeln befreiten Geflügelkörpers oder eines Teils davon mit einer Karkasse des Geflügelkörpers oder Teils davon verbindenden Sehne, ausgebildet und eingerichtet, insbesondere zum Ausführen des Verfahrens nach einem oder mehreren der Ansprüche 12 bis 14. Besonders bevorzugt umfassen die Werkzeugeinheiten 37, 38 einen Stellarm 31, 32 und eine aus einem Klingenhalter 21, 21.1 und einer Klinge 22, 22.1 gebildeten Trenneinheit, die zur Bildung einer L-förmigen Einheit an dem Stellarm 31, 32 befestigt ist, wobei der Stellarm 31, 32 den langen Schenkel des L und das Kombinationswerkzeug 15, 16 den kurzen Schenkel des L bildet, und wobei der Klingenhalter 21, 21.1 die Klinge 22, 22.1 zur Bildung eines stumpfen Verdrängungsabschnitts auf einer Längsseite der Klinge 22, 22.1 und an einer Stirnseite der Klinge 22, 22.1 abdeckt, während die Klinge 22, 22.1 auf der der stumpfen Längsseite gegenüberliegenden Längsseite einen scharfkantigen Trennabschnitt aufweist, wobei die dem Stellarm 31, 32 zugewandte Innenseite des kurzen Schenkels den scharfkantigen Trennabschnitt und die vom Stellarm 31, 32 wegweisende Außenseite des kurzen Schenkels den Verdrängungsabschnitt bildet.

Im Folgenden wird das erfindungsgemäße Verfahren anhand der Zeichnung näher beschrieben.

Das Verfahren ist zum Trennen einer ein Brustfilet eines entweideten und von Flügeln befreiten Geflügelkörpers oder eines Teils davon mit einer Karkasse des Geflügelkörpers oder Teils davon verbindenden Sehne ausgebildet und eingerichtet. Zunächst wird ein Geflügelkörper oder ein Teil davon, beispielhaft eine Brustkappe, automatisch oder manuell auf eine an einer Transporteinheit 12 befestigte Haltevorrichtung 13 aufgesteckt, also aufgesattelt. Am Beispiel einer Brustkappe erfolgt das Aufsatteln beispielsweise mit den Rabenbeinen voran. Der aufgesattelte Geflügelkörper oder das Teil davon wird dann mittels der Transporteinheit 12 in Transportrichtung T entlang eines Transportpfads mit der Anusseite voraus in Richtung eines Mittels 14 zum Trennen transportiert. In Fällen, in denen der Geflügelkörper oder das Teil davon mit den Rabenbeinen voraus oder seitlich transportiert wird, erfolgt vor dem Erreichen des Mittels 14 zum Trennen eine Drehung der Haltevorrichtung 13, so dass der Geflügelkörper oder das Teil davon mit der Anusseite voraus das Mittel 14 zum Trennen erreicht. Beim Transport des Geflügelkörpers oder des Teil davon durch das Mittel 14 zum Trennen hindurch wird die Sehne mit dem Mittel 14 zum Trennen getrennt, indem das Mittel 14 zum Trennen aus einer Warteposition in eine Trennposition bewegt wird, wenn der Geflügelkörper oder das Teil davon an dem Mittel 14 zum Trennen vorbeitransportiert wird. Nach dem Trennen der Sehne wird das Mittel 14 zum Trennen zurück in die Warteposition bewegt.

Dieses Verfahren zeichnet sich erfindungsgemäß dadurch aus, dass mindestens das Mittel 14 zum Trennen bei der Bewegung aus der Warteposition in die Trennposition mit einem das Brustfilet verdrängenden Abschnitt in das Brustfilet eintaucht und dabei die Sehne zunächst nur aufnimmt, und die Sehne beim Weitertransport des Geflügelkörpers oder des Teils davon dann auf einen die Sehne trennenden Abschnitt geführt wird, wodurch die Sehne vollständig getrennt wird. Es erfolgt also zunächst das "Aufsammeln" der Sehne, ohne - am Beispiel der Brustkappe - das Außenfilet zu schneiden oder anderweitig zu verletzen und ohne bis zum Innenfilet durchzudringen. Letztlich wird durch den das Brustfilet verdrängenden Abschnitt das Brustfilet nur zur Seite geschoben und ein Weg innerhalb der Brustkappe gebahnt, damit das Mittel 14 zum Trennen im Bereich des Flügelgelenks die Sehne aufnehmen kann. Erst dann erfolgt der eigentliche Trennschnitt.

Wie beschrieben, ist das Verfahren für das Trennen mindestens einer ein Brustfilet eines entweideten und von Flügeln befreiten Geflügelkörpers oder eines Teils davon mit einer Karkasse des Geflügelkörpers oder Teils davon verbindenden Sehne ausgebildet und eingerichtet. Vorzugsweise werden mit dem Verfahren jedoch zwei Sehnen getrennt, nämlich synchron oder zeitversetzt für zwei Brustfilets jeweils eine einem Brustfilet zugeordnete Sehne. Das Verfahren umfasst aber auch das Trennen von mehr als einer Sehne für jedes Brustfilet, z.B. für den Fall, dass jedes Brustfilet mit mehr als einer Sehne oder Sehnenabschnitten mit der Karkasse verbunden ist.

Bevorzugt umfasst das Mittel 14 zum Trennen mindestens ein Kombinationswerkzeug 15, 16, das einen Klingenhalter 21, 21.1 und eine Klinge 22, 22.1 umfasst, wobei der Klingenhalter 21, 21.1 beim Schwenken aus der Warteposition in die Trennposition mit einer stumpfen Fädelkante 23, 24 leicht in den Geflügelkörper oder das Teil davon eintaucht, ohne den Geflügelkörper oder das Teil davon zu schneiden, und dabei die Sehne auffädelt, und die Sehne durch den Weitertransport des Geflügelkörpers oder des Teils davon auf eine scharfkantige Schneidkante 29, 30 der Klinge 22, 22.1 geführt und geschnitten wird. Während des Eintauchens des Kombinationswerkzeugs 15, 16 und des Auffädelns der Sehne ist die Klinge 22, 22.1 durch den Klingenhalter 21, 21.1 abgedeckt, so dass ein Kontakt des Geflügelkörpers oder des Teils davon mit der Klinge 22, 22.1 verhindert wird, bis die Sehne gefunden und aufgefädelt ist.

Das Verfahren wird besonders bevorzugt mit einer Vorrichtung nach einem oder mehreren der Ansprüche 1 bis 11, wie sie weiter vorne beschrieben ist, ausgeführt. Besonders bevorzugt kommt dabei die Werkzeugeinheit 37, 38 nach Anspruch 15 zum Einsatz.

## Patentansprüche

1. Vorrichtung (10), ausgebildet und eingerichtet zum Trennen mindestens einer ein Brustfilet eines entweideten und von Flügeln befreiten Geflügelkörpers oder eines Teils davon mit einer Karkasse des Geflügelkörpers oder Teils davon verbindenden Sehne, umfassend eine Transportvorrichtung (11) mit einer umlaufend angetriebenen Transporteinheit (12) sowie mindestens einer daran befestigten Haltevorrichtung (13), die zum Halten des Geflügelkörpers oder des Teils davon während der Verarbeitung ausgebildet und eingerichtet ist, und ein Mittel (14) zum Trennen der Sehne, wobei das Mittel (14) zum Trennen aus einer Warteposition in eine Trennposition und zurück bewegbar ausgebildet und eingerichtet ist und die Transporteinheit (12) mit der oder jeder Haltevorrichtung (13) unter Bildung eines Transportpfades zum Transportieren des Geflügelkörpers oder des Teils davon in Transportrichtung T mit der Anusseite voraus in Richtung des Mittels (14) zum Trennen ausgebildet und eingerichtet ist, **dadurch gekennzeichnet, dass** das Mittel (14) zum Trennen der Sehne mindestens ein Kombinationswerkzeug (15 oder 16) umfasst, das derart ausgebildet und eingerichtet ist, dass es einen das Brustfilet verdrängenden Abschnitt und einen die Sehne trennenden Abschnitt aufweist.

2. Vorrichtung (10) nach Anspruch 1, **dadurch gekennzeichnet, dass** das Mittel (14) zum Trennen zwei Kombinationswerkzeuge (15, 16) umfasst, die auf einander gegenüberliegenden Seiten des Transportpfads angeordnet sind, wobei die beiden Kombinationswerkzeuge (15, 16) diametral oder in Transportrichtung T versetzt zueinander angeordnet sind.

3. Vorrichtung (10) nach Anspruch 1 oder 2, **dadurch gekennzeichnet, dass** jedes Kombinationswerkzeug (15, 16) um eine vertikal gerichtete Achse, die senkrecht zur Transportrichtung T ausgerichtet ist, schwenkbar ausgebildet ist.

4. Vorrichtung (10) nach einem oder mehreren der Ansprüche 1 bis 3, **dadurch gekennzeichnet, dass** jedes Kombinationswerkzeug (15, 16) einen Klingenhalter (21, 21.1) und eine Klinge (22, 22.1) umfasst, wobei der Klingenhalter (21, 21.1) auf der dem Transportpfad zugewandten Seite zum Verdrängen des Brustfilets stumpf ausgebildet und eingerichtet ist, während die Klinge (22, 22.1) auf der dem Transportpfad abgewandten Seite zum Trennen der Sehne scharfkantig ausgebildet und eingerichtet ist.

5. Vorrichtung (10) nach Anspruch 4, **dadurch gekennzeichnet, dass** der Klingenhalter (21, 21.1) eine stumpfe Fädelkante (23, 24) aufweist, die in der Warteposition des Kombinationswerkzeugs (15, 16) in Transportrichtung T gesehen auf diese zulaufend ausgerichtet und in der Trennposition des Kombinationswerkzeugs (15, 16) etwa parallel zur Transportrichtung T ausgerichtet ist.

6. Vorrichtung (10) nach Anspruch 5, **dadurch gekennzeichnet, dass** die stumpfe Fädelkante (23, 24) an ihrem freien Ende (25, 26), das der Transportrichtung T entgegengerichtet ist, eine abgerundete Leitnase (27, 28) aufweist, die die Klinge (22, 22.1) in Transportrichtung T abdeckt.

7. Vorrichtung (10) nach einem oder mehreren der Ansprüche 4 bis 6, **dadurch gekennzeichnet, dass** der Klingenhalter (21, 21.1) und die Klinge (22, 22.1) einstückig miteinander ausgebildet und aus Edelstahl hergestellt sind.

8. Vorrichtung (10) nach einem oder mehreren der Ansprüche 4 bis 7, **dadurch gekennzeichnet, dass** der Klingenhalter (21, 21.1) und/oder die Klinge (22, 22.1) lösbar an einem Stellarm (31, 32) angeordnet ist/sind, wobei der Stellarm (31, 32) bezüglich seiner Position quer zur Transportrichtung T zur Veränderung des Abstandes des Kombinationswerkzeugs (15, 16) zur Haltevorrichtung (13) und damit zur Veränderung der Eintauchtiefe jedes Kombinationswerkzeugs (15, 16) in den zu verarbeitenden Geflügelkörper oder das Teil davon verstellbar ausgebildet und eingerichtet ist.

9. Vorrichtung (10) nach einem oder mehreren der Ansprüche 4 bis 8, **dadurch gekennzeichnet, dass** der Klingenhalter (21, 21.1) und/oder die Klinge (22, 22.1) in seiner/ihrer Position bzw. Ausrichtung zur Haltevorrichtung (13) zur Veränderung des Winkels der Schneidkante (29, 30) und/oder der Fädelkante (23, 24) zur Transportrichtung T verstellbar ausgebildet und eingerichtet ist.

10. Vorrichtung (10) nach einem oder mehreren der Ansprüche 1 bis 9, **dadurch gekennzeichnet, dass** jedes Kombinationswerkzeug (15, 16) in vertikaler Richtung zur Transportrichtung T verstellbar ausgebildet und eingerichtet ist.

11. Vorrichtung (10) nach einem oder mehreren der Ansprüche 1 bis 10, **dadurch gekennzeichnet, dass** jedes Kombinationswerkzeug (15, 16) an eine Steuerungs- und/oder Regelungseinrichtung angeschlossen ist, derart, dass der Eintauchzeitpunkt des Kombinationswerkzeugs (15, 16) in den zu verarbeitenden Geflügelkörper oder das Teil davon, also insbesondere das Bewegen aus der Warteposition in die Trennposition und zurück, individuell steuerbar und/oder regelbar ist.

12. Verfahren, ausgebildet und eingerichtet zum Trennen mindestens einer ein Brustfilet eines entweideten und von Flügeln befreiten Geflügelkörpers oder eines Teils davon mit einer Karkasse des Geflügelkörpers oder Teils davon verbindenden Sehne, umfassend die Schritte:
- Aufsatteln des Geflügelkörpers oder des Teils davon auf eine an einer Transporteinheit (12) befestigten Haltevorrichtung (13),
- Transportieren des Geflügelkörpers oder des Teils davon mittels der Transporteinheit (12) in Transportrichtung T entlang eines Transportpfads mit der Anusseite voraus in Richtung eines Mittels (14) zum Trennen,
- Trennen der Sehne mit dem Mittel (14) zum Trennen, indem das Mittel (14) zum Trennen aus einer Warteposition in eine Trennposition bewegt wird, wenn der Geflügelkörper oder das Teil davon an dem Mittel (14) zum Trennen vorbeitransportiert wird,
- wobei das Mittel (14) zum Trennen nach dem Trennen der Sehne zurück in
die Warteposition bewegt wird,
**dadurch gekennzeichnet, dass** das Mittel (14) zum Trennen bei der Bewegung aus der Warteposition in die Trennposition mit einem das Brustfilet verdrängenden Abschnitt des Mittels (14) zum Trennen in das Brustfilet eintaucht und dabei die Sehne zunächst nur aufnimmt, und die Sehne beim Weitertransport des Geflügelkörpers oder des Teils davon dann auf einen die Sehne trennenden Abschnitt des Mittels (14) zum Trennen geführt wird, wodurch die Sehne vollständig getrennt wird.

13. Verfahren nach Anspruch 12, **dadurch gekennzeichnet, dass** das Mittel (14) zum Trennen mindestens ein Kombinationswerkzeug (15, 16) umfasst, das einen Klingenhalter (21, 21.1) und eine Klinge (22, 22.1) umfasst, wobei der Klingenhalter (21, 21.1) beim Schwenken aus der Warteposition in die Trennposition mit einer stumpfen Fädelkante (23, 24) leicht in den Geflügelkörper oder das Teil davon eintaucht, ohne den Geflügelkörper oder das Teil davon zu schneiden, und dabei die Sehne auffädelt, und die Sehne durch den Weitertransport des Geflügelkörpers oder des Teils davon auf eine scharfkantige Schneidkante (29, 30) der Klinge (22, 22.1) geführt und geschnitten wird.

14. Verfahren nach Anspruch 12 oder 13, **dadurch gekennzeichnet, dass** es mit einer Vorrichtung (10) nach einem oder mehreren der Ansprüche 1 bis 11 ausgeführt wird.

15. Werkzeugeinheit (37, 38), ausgebildet und eingerichtet zum Trennen einer ein Brustfilet eines entweideten und von Flügeln befreiten Geflügelkörpers oder eines Teils davon mit einer Karkasse des Geflügelkörpers oder Teils davon verbindenden Sehne, insbesondere zum Ausführen des Verfahrens nach einem oder mehreren der Ansprüche 12 bis 14, **gekennzeichnet durch** einen Stellarm (31, 32) und eine aus einem Klingenhalter (21, 21.1) und einer Klinge (22, 22.1) gebildeten Kombinationswerkzeug (15, 16), das zur Bildung einer L-förmigen Einheit an dem Stellarm (31, 32) befestigt ist, wobei der Stellarm (31, 32) den langen Schenkel des L und das Kombinationswerkzeug (15, 16) den kurzen Schenkel des L bildet, und wobei der Klingenhalter (21, 21.1) die Klinge (22, 22.1) zur Bildung eines stumpfen Verdrängungsabschnitts auf einer Längsseite der Klinge (22, 22.1) und an einer Stirnseite der Klinge (22, 22.1) abdeckt, während die Klinge (22, 22.1) auf der der stumpfen Längsseite gegenüberliegenden Längsseite einen scharfkantigen Trennabschnitt aufweist, wobei die dem Stellarm (31, 32) zugewandte Innenseite des kurzen Schenkels den scharfkantigen Trennabschnitt und die vom Stellarm (31, 32) wegweisende Außenseite des kurzen Schenkels den Verdrängungsabschnitt bildet.
